# EUROPÄISCHE PATENTANMELDUNG

(11) **EP 1 577 155 A2**
(43) Veröffentlichungstag der Anmeldung: **21.09.2005**
(21) Anmeldenummer: 05005672.0
(22) Anmeldetag: 16.03.2005
(51) Int. Cl.: B60N 2/50, B60N 2/02

(54) **Fahrzeugsitz für einen Personenkraftwagen**

(30) Priorität: 17.03.2004 DE 102004013308
(71) Anmelder: DaimlerChrysler AG, 70567 Stuttgart (DE)
(72) Erfinder: Kern, Simon, 60528 Frankfurt (DE); Maas, Jürgen, Dr., 65779 Kelkheim (DE)

(57) **Zusammenfassung**

Die Erfindung betrifft einen Fahrzeugsitz für einen Personenkraftwagen mit aktiver Sitzfederung. Die Sitzstruktur (11) ist über ein Schwingrahmen (21), der über Feder-Dämpferpaare (22,23) aufgehängt ist an einem Chassis eines Personenkraftwagens beweglich gelagert. Die aktive Sitzfederung (2) weist dabei Aktoren (24) auf, die mit je einem Feder-Dämpferpaar (22,23) zum Steuern des Übertragungsverhaltens des Feder-Dämpferpaares verbunden sind. Um eine besonders feinfühlige Regelung zu ermöglichen ist vorgesehen, dass die aktive Sitzfederung (2) je geregeltem Freiheitsgrad des Fahrzeugsitzes (Z,α) einen Wegesensor (27) aufweist, der zu Aufnahme der Relativposition von Schwingrahmen (21) und Fahrzeugchassis (16) dient.

## Beschreibung

Die Erfindung betrifft einen Fahrzeugsitz für einen Personenkraftwagen nach den Merkmalen des Oberbegriffs des Anspruchs 1.

Die JP 09 109 757 A zeigt einen Fahrzeugsitz für Nutzfahrzeuge, der eine aktive Sitzfederung aufweist. Bei diesem Sitz werden am Sitz auftretende Beschleunigungen in vertikaler Richtung kompensiert. Dazu weist der Sitz Beschleunigungssensoren auf, die am Sitz und am Fahrzeug angebracht sind und eine Regelvorrichtung, die anhand der Signale der Beschleunigungssensoren eine Kompensation der auftretenden Beschleunigungen vornimmt.

Der vorliegenden Erfindung liegt die Aufgabe zu Grunde, einen Fahrzeugsitz für einen Personenkraftwagen zu schaffen, der eine aktive Sitzfederung aufweist, die ein komfortables und feinfühliges Regelverhalten aufweist. Insbesondere soll der Fahrzeugsitz möglichst wenig Bauraum beanspruchen.

Diese Aufgabe wird erfindungsgemäß durch einen Fahrzeugsitz mit den Merkmalen des Anspruchs 1 gelöst.

Der Fahrzeugsitz weist eine beweglich gelagerte Sitzstruktur mit einem Sitzkissen auf, welches über einen Schwingrahmen an einem fahrzeugfesten Sitzunterbau beweglich gehaltert ist. Das Sitzkissen ist mit einer Rückenlehne verbunden. An gegenüberliegenden Enden des Schwingrahmens sind Feder-Dämpferpaare angeordnet, die jeweils mit einem Aktor verbunden sind. Der Aktor steuert das Übertragungsverhalten des ihm angeschlossenen Feder-Dämpferpaares. Je geregeltem Freiheitsgrad weist die aktive Sitzfederung einen Wegesensor auf, der zur Aufnahme der Relativposition von Schwingrahmen und Sitzunterbau dient. Dieser Wegesensor ermöglicht eine besonders feinfühlige Regelung des Sitzkissens, da er einen Absolutwert der Sitzposition im Verhältnis zur Fahrerkabine angibt, und damit einen direkten Wert für eine Schwingungsamplitude des Sitzkissens liefert. Insbesondere können auf diese Art und Weise Offsets in der Bestimmung der Position der Sitzstruktur bzw. des Sitzkissens vermieden werden.

Die Lagerung der Sitzstruktur bzw. des Sitzkissens auf einem Schwingrahmen, der zwei Feder-Dämpferpaare aufweist die an sich gegenüberliegenden Enden des Schwingrahmens angeordnet sind, ermöglicht eine besonders platzsparende und in zwei Freiheitsgraden bewegliche Halterung des Fahrzeugsitzes. Als Freiheitsgrad wird dabei eine Bewegung des Sitzes in der vertikalen Richtung des Fahrzeugs, der Z-Achse, bezeichnet. Ein weiterer Freiheitsgrad ist eine Nickbewegung des Sitzes, wobei sich der Sitz um einen gewissen Winkelgrad α um eine Querachse des Fahrzeugs neigt.

In einer Ausführung ist vorgesehen, dass die Aktoren als Dämpfer der Feder-Dämpferpaare ausgebildet sind. Vorzugsweise weisen die Aktoren einen Hubzylinder auf, der als pneumatischer, hydraulischer oder elektrohydraulischer Hubzylinder ausgebildet sein kann und dadurch einen Dämpfer des Feder-Dämpferpaares ausbilden kann. Somit kann auf einen zusätzlichen Dämpfer verzichtet werden, wodurch zusätzlich Bauraum gespart wird.

In einem Personenkraftwagen ist insbesondere der Bauraum in der Höhe begrenzt. In einer Ausführung kann deswegen vorgesehen sein, dass die Aktoren horizontal angeordnet sind und ein Umlenkgetriebe aufweisen, welches die Aktorbewegung in eine lineare vertikale Bewegung zum Steuern des dem Aktor zugeordneten Feder-Dämpferpaares umsetzt. Dadurch wird erreicht, dass mit einem horizontalen Aktor ein Freiheitsgrad in vertikaler Richtung steuerbar wird und zugleich der Bauraum in vertikaler Richtung minimal wird. Somit kann entlang des Freiheitsgrades Z eine sehr große Strecke als Schwingungsamplitude für den Fahrzeugsitz ausgenutzt werden.

Es kann vorgesehen sein, dass die Aktoren als pneumatische oder hydraulische Aktoren ausgebildet sind und einen Druckzylinder aufweisen, der vorzugsweise als Hubzylinder zum Steuern des dem Aktor zugeordneten Feder-Dämpferpaares ausgebildet ist.

In einer Ausführung kann vorgesehen sein, dass die Aktoren als elektrische Motoren, vorzugsweise Synchronmotoren ausgebildet sind und als Umlenkgetriebe eine Abtriebswelle aufweisen, die mit einer Hubstange zum Steuern des dem Aktor zugeordneten Feder-Dämpferpaares zusammenwirkt. Elektrische Motoren, vorzugsweise Synchronmotoren sind relativ preiswert herzustellen und einfach steuerbar. Somit ermöglichen solche Aktoren ein preisgünstiges System, welches mit vernünftigem Material- und Geldaufwand eine wirtschaftliche aktive Sitzfederung ermöglicht.

Für eine gute Regelung der aktiven Sitzfederung ist vorgesehen, dass der Schwingrahmen je geregeltem Freiheitsgrad zumindest einen mit der aktiven Sitzfederung verbundenen Beschleunigungssensor zum Aufnehmen der Beschleunigungswerte der Sitzstruktur aufweist. Da die Sitzstruktur, welche ein Sitzkissen, eine Rückenlehne und einen diese halternden Sitzrahmen aufweist, eine beweglich gelagerte Baueinheit bildet, kann ein Sensor zur Aufnahme einer Bewegung und/oder Beschleunigung und/oder eines Weges der Sitzstruktur an einem Bauteil dieser Sitzstruktur, vorzugsweise am Sitzkissens oder an der Rückenlehne angeordnet sein.

Es kann zudem vorgesehen sein, dass am Sitzunterbau, der fahrzeugfest ausgebildet ist, je geregeltem Freiheitsgrad ein mit der aktiven Sitzfederung verbundener weiterer Beschleunigungssensor zum Aufnehmen der Beschleunigungswerte des fahrzeugfesten Sitzunterbaus vorgesehen ist.

Durch die Ausbildung der aktiven Sitzfederung mit mehreren Sensoren, insbesondere die Kombination von Wegesensoren und Beschleunigungssensoren, wird eine besonders feinfühlige und schnell ansprechende Regelung der aktiven Sitzfederung erreicht, da direkt auf gemessene Werte zurückgegriffen werden kann und nicht etwa wie bei Sitzfederungssystemen, bei denen nur eine Art Sensor vorhanden ist, die weiteren Werte durch rechnerische Methoden abgeleitet werden müssen.

In einer Ausführung ist vorgesehen, dass die aktive Sitzfederung je geregeltem Freiheitsgrad jeweils einen separaten Regelkreis aufweist. Insbesondere können in der Regelvorrichtung Kompensationsmaßnahmen, vorzugsweise ein Entkopplungsnetzwerk vorgesehen sein, die inhärente Kopplungen zwischen den einzelnen Freiheitsgraden ausgleichen oder kompensieren. Durch die getrennte Ausführung der Regelkreise je Freiheitsgrad ist es möglich, dass die Signale der Sensoren nach Freiheitsgraden getrennt, als Messgrößen für die Ermittlung einer Stellgröße zur Ansteuerung der aktiven Sitzfederung, gemäß einer für den jeweiligen Freiheitsgrad speziell vorgegebenen Störübertragungsverhalten, verwendet werden. Dadurch kann auf fahrzeugbezogene Daten oder auf sitzbezogene Daten speziell eingegangen werden, da für das Fahrzeug oder den Sitz selbst ein entsprechendes Modell entworfen werden kann, welches je nach Freiheitsgrad die entsprechenden Eigenarten des Fahrzeugs beziehungsweise des Sitzes berücksichtigt.

Ziel der Regelung ist ein vibrationsfreies Sitzen. Das bedeutet, dass die Zustandsgrößen des Sitzes zu Null zu regeln sind, und der Entwurf der Regelung optimal bezüglich des Störverhaltens vorzunehmen ist. Wird die aktive Sitzfederung in eine übergeordnete Fahrdynamikregelung integriert, dann kann sich unter ergonomischen Aspekten das Führen der Sitzbewegung über die Sollwerte als vorteilhaft erweisen, was hier nicht näher betrachtet wird.

In einer Ausführung ist vorgesehen, dass die aktive Sitzfederung ein Störübertragungsverhalten aufweist, das sich aus der Kombination eines Vibrationsregler und eines Positionsreglers ergibt. Insbesondere ist vorgesehen, dass die Regelvorrichtung dem Vibrationsregler als Messgrößen die Beschleunigungswerte des ersten Sensors und/oder des zweiten Sensors zuführt. Der Vibrationsregler ermittelt dann aus den zugeführten Beschleunigungswerten die jeweils zugehörigen Geschwindigkeitswerte und die zugehörigen Positionswerte durch approximierende Integration. Dadurch wird eine Beobachterstruktur der Zustandsregelung umgesetzt, mit der die Stellkräfte berechnet werden.

Weiterhin kann vorgesehen sein, dass die Regelvorrichtung dem Positionsregler als Messgröße die Relativpositionswerte des dritten Sensors zuführt. Es kann hierfür ein PID-Regler als Positionsregler verwendet werden.

Um auch bei großen Schwingungsamplituden des Fahrzeugs beziehungsweise bei großen Schwingungsamplituden zwischen Fahrzeug und Sitz, eine komfortable aktive Sitzregelung zu ermöglichen, ist vorgesehen, dass oberhalb eines variabel festlegbaren Amplitudenmaximalwertes die aktive Sitzfederung eine passive Sitzfederung nachbildet. Dadurch wird ermöglicht, dass der Fahrzeugsitz ab einer Überschreitung eines bestimmten Amplitudenwertes der Schwingung, der Bewegung der Fahrzeugkabine folgt, so dass die auftretenden Aktorkräfte, sowie die erforderlichen Hubwege des Fahrzeugsitzes in einem praktikablen Rahmen bleiben.

Die Erfindung ist anhand eines in den Zeichnungen näher dargestellten Ausführungsbeispiels im Folgenden näher beschrieben.

Es zeigen:
- Fig. 1: eine schematische Seitenansicht eines Personenkraftwagensitzes mit Sitzunterbau und aktiver Sitzfederung,
- Fig. 2: die Darstellung einer schematischen Reglerstruktur der aktiven Sitzfederung.

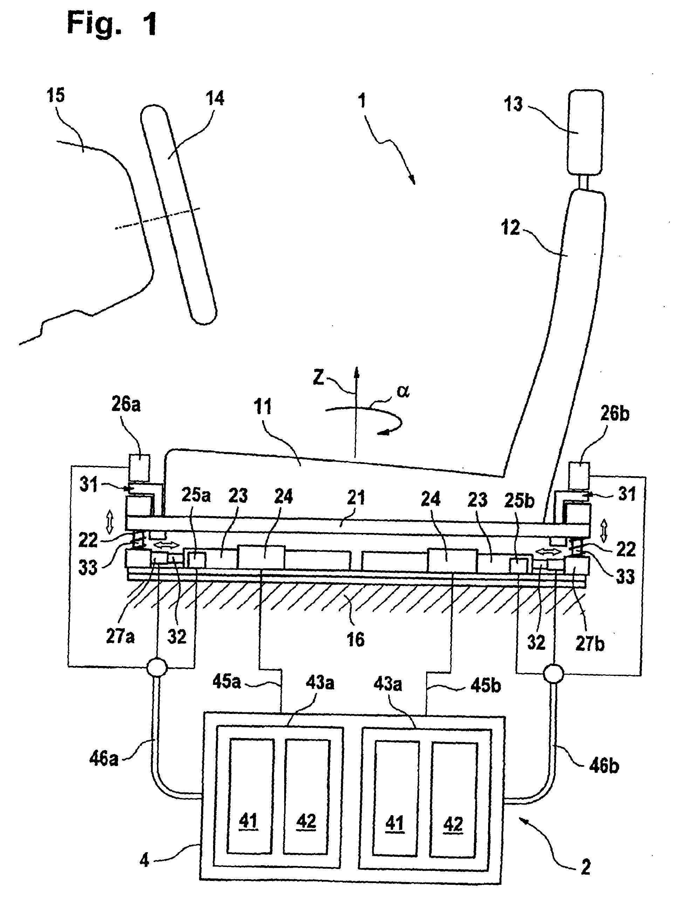

Figur 1 zeigt in schematischer Seitenansicht einen Fahrzeugsitz 1 eines Personenkraftwagens. Der Fahrzeugsitz 1 ist im Innenraum eines Personenkraftwagens angeordnet. In der Figur 1 ist schematisch ein Lenkrad 14 sowie eine Armaturentafel 15 dargestellt, anhand derer die Orientierung des Fahrzeugsitzes 1 im Fahrzeuginnenraum entnehmbar ist. Der Fahrzeugsitz 1 weist einen Sitzkissen 11, sowie eine mit dem Sitzkissen 11 über einen Sitzrahmen verbundene Rückenlehne 12 auf. Am oberen Ende der Rückenlehne ist eine Kopfstütze 13 angeordnet.

Das Sitzkissen 11 ist mit einem Schwingrahmen 21 verbunden, der seinerseits über zumindest zwei Feder-Dämpferpaare die jeweils an der Forderseite und an der Rückseite des Schwingrahmens 21 angeordnet sind, mit dem Chassis des Personenkraftwagens verbunden. Über die an sich gegenüberliegenden Enden des Schwingrahmens 21 angeordneten Feder-Dämpferpaare 22, 23 ist der Fahrzeugsitz 1 in zwei Freiheitsgraden beweglich an dem fahrzeugfesten Chassis gelagert. Ein Freiheitsgrad ist dabei die Bewegung des Fahrzeugsitzes linear entlang einer vertikalen Hochachse des Fahrzeugs, Z-Achse genannt, und ein weiterer Freiheitsgrad ist eine Nick- oder Rollbewegung um die Fahrzeugquerachse, α genannt.

Unabhängig von dem in Figur 1 dargestellten Ausführungsbeispiel ist es auch möglich, den Sitz mittels mehrerer Feder-Dämpferpaare, insbesondere vier Feder-Dämpferpaaren zu lagern, wobei der Sitz dann mehrere Freiheitsgrade aufweist, die neben dem genannten Z und α noch die Fahrzeuglängsachse X und/oder die Fahrzeugquerachse Y und/oder Drehbewegungen um die Fahrzeuglängsachse umfassen können.

Jedes der in Figur 1 dargestellten Feder-Dämpferpaare 22,23 ist mit einem Aktor 24 verbunden. Die Aktoren 24 werden dabei von einer Regelvorrichtung 4 der aktiven Sitzfederung 2 angesteuert und beeinflussen die Übertragungskennlinie des dem Aktor zugeordneten Feder-Dämpferpaares 22,23. Die Aktoren sind dabei als zweiphasige Motoren ausgebildet, die eine Abtriebswelle 32 aufweisen. Die Abtriebswelle 32 ist mit einem Hubzylinder 33 verbunden, der die horizontale Drehbewegung der Abtriebswelle 32 in eine vertikale Hubbewegung zum Steuern des Schwingrahmens 21 und damit des Fahrzeugssitzes beziehungsweise des Sitzkissens 11 umsetzt. Die Motoren werden durch die Regelvorrichtung 4 so angesteuert, dass sie stromgesteuert beziehungsweise kraftgeregelt betreibbar sind. Der Kraftsollwert wird dabei von der Regelvorrichtung 4 der aktiven Sitzregelung 2 generiert und als additive Wechselkraft parallel zu der passiven Federung auf den Schwingrahmen 21 eingeleitet.

Als Motoren können alternativ auch Linearmotoren eingesetzt werden, wobei deren Antriebskraft über ein Umlenkgetriebe in eine Hubbewegung zum Steuern des Fahrzeugsitzes umgelenkt wird.

Die passive Federung des Fahrzeugsitzes 1 erfolgt wie in der dargestellten Konstruktion über zwei beziehungsweise vier Federn, mit der die Abstützung der Grundlast von Sitz und Insasse erfolgt. Dadurch ist der Fahrzeugsitz statisch in Ruhelage, was den Kraftbedarf und damit den Bauraum sowie den Energieverbrauch der Aktoren der aktiven Sitzregelung 2 minimiert.

Die Federn 22 sind als Federn mit progressiver Kennlinie ausgebildet und wirken so einem Durchschlagen der Federung bei hohen Sitzamplituden entgegen. Ebenso sind die Federn 22 so dimensioniert, dass die Sitzaufhängung bei Ausfall der elektrischen Aktoren 24 eine Eigenfrequenz aufweist die dem einer herkömmlichen Sitzfederung entspricht, also in einem bei Personenkraftwagen üblichen Bereich von 2 Hz bis 6 Hz, vorzugsweise 4 Hz liegt.

Um der Regelvorrichtung 4 bzw. der aktiven Sitzfederung 2 die notwendigen Informationen über vorhandene Störgrößen zuleiten zu können, weist der Fahrzeugsitz 1 beziehungsweise die aktive Sitzregelung 2 mehrere Sensoren auf. Je geregeltem Freiheitsgrad sind dabei getrennte Sensoren vorgesehen. Ein erster fahrzeugfester Beschleunigungssensor 25a, b ist dabei mit dem Chassis des Fahrzeugs verbunden. Ein zweiter Beschleunigungssensor 26a, b ist mit dem Sitzkissen 11 beziehungsweise mit dem Schwingrahmen 21 fest verbunden und nimmt somit die Beschleunigungswerte des Sitzkissens 11 beziehungsweise indirekt die Beschleunigungswerte eines auf dem Sitzkissen 11 sitzenden Fahrers auf. Ein dritter Sensor ist zwischen Sitzkissen 11 beziehungsweise Schwingrahmen 21 und Fahrzeugchassis im Bereich der Aktoren 24 angeordnet und ist als Wegesensor 27a, b ausgebildet, der die Relativposition zwischen Schwingrahmen 21 und Chassis aufnimmt. In der Figur 1 sind die Sensoren nach Freiheitsgrad getrennt dargestellt, und für den Freiheitsgrad vorne mit dem Index a bezeichnet und für den Freiheitsgrad hinten mit dem Index b bezeichnet.

Die Ausgangssignale der Sensoren 25,26 und 27 sind jeweils zusammengefasst und führen in entsprechenden Signalleitungen 46a beziehungsweise 46b von den Sensoren zu der Regelvorrichtung 4. In der Reglervorrichtung 4 werden die Messgrößen "vorne" und "hinten" durch eine Transformation in entsprechende Messgrößen der geregelten Freiheitsgrade z und α umgerechnet. Die Stellkräfte für die vorne bzw. hinten am Sitz angeordneten Aktoren werden durch eine entsprechende Rücktransformation ermittelt.

Die Regelvorrichtung 4 der aktiven Sitzfederung 2 weist eine interne Struktur auf, die für jeden geregelten Freiheitsgrad eine separate identisch aufgebaute Reglerstruktur vorsieht. Jeder dieser identisch aufgebauten Reglerstrukturen 43a beziehungsweise 43b besteht aus einer Kombination von zwei verschiedenen Reglertypen.

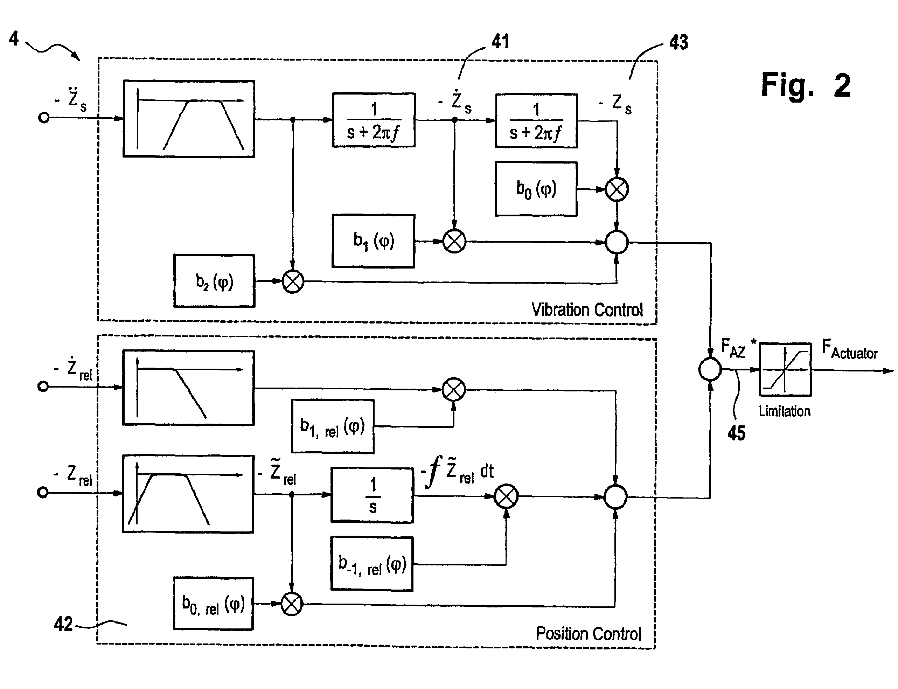

In Figur 2 ist der Aufbau dieser Reglerstruktur 43 schematisch dargestellt. Die Struktur besteht aus einer Kombination eines Vibrationsreglers 41 mit einem Positionsregler 42. Mit dieser Reglerstruktur ist es möglich, große Relativbewegungen zwischen Kabine und dem Fahrzeugsitz zu unterdrücken, indem niederfrequente Schwingungen mit großer Schwingungsamplitude weitgehend von dem Chassis auf den Sitz übertragen werden. Der Positionsregler 42 bewerkstelligt dabei die Übertragung niederfrequenter Schwingungen. Der Vibrationsregler 41 weist eine Zustandsreglerstruktur auf, und dient zur Unterdrückung der höherfrequenten Schwingungen. Die Abgrenzung der jeweiligen Wirkung der Regler, die in ihrer Struktur parallel eingreifen, wird dabei durch geeignete Filterung der verwendeten Messgrößen vorgenommen. Dabei trägt diese Reglerstruktur dazu bei, große Relativbewegungen bei gleichzeitig möglichst guter Schwingungsunterdrückung zu vermeiden.

Als Eingangsgrößen stehen dabei die Beschleunigungen der Sitzstruktur zur Verfügung, die als Eingangsgrößen dem Vibrationsregler 41 zur Minimierung der Schwingungsbelastung dienen. Zum anderen werden die seitens der Aktorik zur Verfügung stehenden Relativbewegungen zwischen Sitzstruktur und Chassis herangezogen, und dem Positionsregler 42 als Messgrößen zugeführt.

Da beim Vibrationsregler 41 neben der gemessenen Beschleunigung zusätzlich intern auch die Geschwindigkeiten und Positionen zugeführt werden, sind auch diese Zustandsgrößen aus dem gemessenen Beschleunigungssignal durch approximierende Integration zu generieren. Da in der Praxis immer Offsets in den Signalen vorhanden sind, werden die Beschleunigungssignale zudem über einen Hochpass gefiltert.

Der Positionsregler 42 verwendet als Eingangsgröße die Relativposition zwischen Sitzstruktur und dem Fahrzeugchassis. Theoretisch würde es ausreichen, lediglich diese Relativposition zurückzuführen. Die weiteren Größen können dann im Regler 42 durch Differentiation beziehungsweise Integration aus dieser Größe gewonnen werden.

Derselbe Aufbau der dargestellten Reglerstruktur ist auch auf den Neigefreiheitsgrad α zu verwenden, indem dann in der Figur 2 der Freiheitsgrad Z durch den Freiheitsgrad α ersetzt wird. Durch eine Rücktransformation werden dabei die für den hinteren und vorderen Aktor erforderlichen Stellkräfte ermittelt, die notwendig sind, um die Freiheitsgrade z und α zu regeln. Das Ausgangssignal 45 der Regelvorrichtung wird unter Berücksichtigung der Kennlinie des elektrischen Aktors als Stellkraft bestimmendes Ausgangssignal mittels der Ausgangsleitung 45a beziehungsweise 45b von der Regelvorrichtung auf den Aktor 24 gegeben.

Zudem ist in der Regelvorrichtung 4 vorgesehen, das Mensch/Sitz -System des jeweiligen Fahrzeugssitzes zu berücksichtigen. Hierfür werden in der Regelvorrichtung 4 Modelle integriert, die das dynamische Verhalten von Sitz und Insasse berücksichtigen. Dadurch wird es ermöglicht das Ziel der Regelung, ein vibrationsfreies Sitzen weitestgehend zu erreichen.

## Patentansprüche

1. Fahrzeugsitz für einen Personenkraftwagen mit einer aktiven Sitzfederung, wobei eine Sitzstruktur über ein Schwingrahmen an einem fahrzeugfesten Sitzunterbau in zumindest zwei Freiheitsgraden beweglich gehaltert ist, indem der Schwingrahmen über zumindest zwei Feder-Dämpferpaare, die an sich gegenüberliegenden Enden des Schwingrahmens angeordnet sind mit dem Sitzunterbau verbunden ist und wobei die aktive Sitzfederung je Freiheitsgrad einen Aktor aufweist, der mit einem Feder-Dämpferpaar zum Steuern des Übertragungsverhaltens des Feder-Dämpferpaares verbunden ist,
**dadurch gekennzeichnet,**
**dass** die aktive Sitzfederung (2) je geregeltem Freiheitsgrad (z, α) einen Wegesensor (27) zur Aufnahme der Relativposition von Schwingrahmen (21) und Sitzunterbau (16) aufweist.

2. Fahrzeugsitz nach Anspruch 1,
**dadurch gekennzeichnet,**
**dass** die Aktoren (24) als Dämpfer der Feder-Dämpferpaare (22, 23) ausgebildet sind.

3. Fahrzeugsitz nach Anspruch 1 oder 2,
**dadurch gekennzeichnet,**
**dass** die Aktoren (24) horizontal angeordnet sind und ein Umlenkgetriebe (31) aufweisen, welches die Aktorbewegung in eine lineare vertikale Bewegung zum Steuern des dem Aktor zugeordneten Feder-Dämpferpaares (22, 23) umsetzt.

4. Fahrzeugsitz nach einem der Ansprüche 1 bis 3,
**dadurch gekennzeichnet,**
**dass** die Aktoren (24) als pneumatische oder hydraulische Aktoren ausgebildet sind und einen Druckzylinder, vorzugsweise einen Hubzylinder zum Steuern des dem Aktor zugeordneten Feder-Dämpferpaares (22, 23) aufweisen.

5. Fahrzeugsitz nach Anspruch 3
**dadurch gekennzeichnet,**
**dass** die Aktoren (24) als elektrische Motoren ausgebildet sind und über ein Umlenkgetriebe (31) in Hubrichtung wirken.

6. Fahrzeugsitz nach einem der Ansprüche 1 bis 5,
**dadurch gekennzeichnet,**
**dass** der Schwingrahmen (21) je geregeltem Freiheitsgrad einen mit der aktiven Sitzfederung (2) verbundenen Beschleunigungssensor (26a, 26b) zum Aufnehmen der Beschleunigungswerte der Sitzstruktur (11, 12) aufweist.

7. Fahrzeugsitz nach einem der Ansprüche 1 bis 6
**dadurch gekennzeichnet,**
**dass** der Sitzunterbau (16) je geregeltem Freiheitsgrad einen mit der aktiven Sitzfederung (2) verbundenen Beschleunigungssensor (25a, 25b) zum Aufnehmen der Beschleunigungswerte des fahrzeugfesten Sitzunterbaus aufweist.

8. Fahrzeugsitz nach einem der Ansprüche 1 bis 7
**dadurch gekennzeichnet,**
**dass** die aktive Sitzfederung (2) je geregeltem Freiheitsgrad (z, α) jeweils einen separaten Regelkreis aufweist.

9. Fahrzeugsitz nach einem der Ansprüche 1 bis 8
**dadurch gekennzeichnet,**
**dass** die aktive Sitzfederung (2) eine Störübertragungsfunktion aufweist, die sich aus der Kombination eines Vibrationsreglers (41) und eines Positionsreglers (42) ergibt.

10. Fahrzeugsitz nach einem der Ansprüche 1 bis 9,
**dadurch gekennzeichnet,**
**dass** die aktive Sitzfederung (2) ein Störübertragungsverhalten aufweist, das oberhalb eines variabel festlegbaren Amplitudenmaximalwertes eine passive Sitzfederung nachbildet.
